(19) Europäisches Patentamt
European Patent Office
Office européen des brevets

(11) **EP 2 283 666 B1**

(12) **EUROPÄISCHE PATENTSCHRIFT**

(45) Veröffentlichungstag und Bekanntmachung des Hinweises auf die Patenterteilung:
**11.03.2015  Patentblatt 2015/11**

(21) Anmeldenummer: **09749525.3**

(22) Anmeldetag: **17.04.2009**

(51) Int Cl.:
**H04W 8/26** (2009.01)     **H04W 12/04** (2009.01)

(86) Internationale Anmeldenummer:
**PCT/EP2009/002827**

(87) Internationale Veröffentlichungsnummer:
**WO 2009/141035 (26.11.2009 Gazette 2009/48)**

(54) **VERFAHREN ZUR OVER-THE-AIR PERSONALISIERUNG VON CHIPKARTEN IN DER TELEKOMMUNIKATION**

METHOD FOR OVER-THE-AIR PERSONALIZING OF CHIP CARDS IN TELECOMMUNICATIONS

PROCÉDÉ DE PERSONNALISATION DE CARTES À PUCE PAR RADIOCOMMUNICATION EN TÉLÉCOMMUNICATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **23.05.2008   DE 102008024798**

(43) Veröffentlichungstag der Anmeldung:
**16.02.2011   Patentblatt 2011/07**

(73) Patentinhaber: **Deutsche Telekom AG**
**53113 Bonn (DE)**

(72) Erfinder: **KALINER, Stefan**
**53639 Königswinter (DE)**

(74) Vertreter: **Cohausz Hannig Borkowski Wißgott Patent- und Rechtsanwaltskanzlei**
**Schumannstrasse 97-99**
**40237 Düsseldorf (DE)**

(56) Entgegenhaltungen:
**EP-A- 1 895 791      WO-A-02/058361**
**WO-A-03/077585      US-B1- 7 266 371**

## Beschreibung

Die Erfindung betrifft ein Verfahren zur Inbetriebnahme und Personalisierung eines Teilnehmeridentifizierungsmoduls SIM.

Chipkarten werden in der Telekommunikation, insbesondere z.B. in den mobilen GSM oder UMTS Systemen, zur eindeutigen und sicheren Identifizierung der Teilnehmer wie auch zur Bereitstellung vieler Sonderfunktionen und Mehrwertdienste eingesetzt. Die je nach Generation und Art des zugrunde liegenden Systemstandards z.B. als UICC, SIM, USIM, R-UIM oder auch ISIM bezeichneten Chipkarten oder Chipkarten-Applikationen (zusammenfassend als "SIM" oder gleichbedeutend als Teilnehmeridentifizierungsmodul bezeichnet) tragen dazu eine Vielzahl spezieller Parameter, geheime Schlüssel und weitere Elemente unterschiedlichster Art, z.B. mit Netzbetreiber-, Anbieter-, Produkt- oder Teilnehmerbezug.

Zur Inbetriebnahme eines mobilen Endgerätes und Teilnahme am Mobilfunkdienst ist ein SIM mit bestimmten individuellen Daten - mindestens Teilnehmeridentität IMSI, Geheimschlüssel K und individuelle Parameter für den Authentisierungsalgorithmus - zwingend erforderlich. Übereinstimmende Elemente müssen in den Teilnehmerdatenbanken (z.B. HLR/AC oder HSS) des Heimatnetzes vorhanden sein, andernfalls ist kein Verbindungsaufbau möglich, weder teilnehmerseitig noch netzseitig.

Das Laden der SIMs und die Ausprägung der Individualdaten erfolgt im Rahmen der Kartenherstellung bei der so genannten Personalisierung, in jedem Falle lange bevor das Teilnehmeridentifizierungsmodul SIM zum Einsatz kommt. Die Wertschöpfungskette der Kartenbereitstellung stellt sich i.d.R. wie folgt dar:

- **Chiphersteller:** Fertigt den Chip mit (Teilen der) Betriebssoftware.

- **Kartenhersteller:** Fertigt den Kartenkörper, implantiert den Chip, lädt ggf. weitere, nicht-individuelle Teile der Betriebssoftware und entsprechende Daten.

- **Personalisierer:** Lädt höher individualisierte Daten, individuelle Teilnehmerkennungen, Geheimschlüssel und ggf. weitere Teile der Software (Applikationen). Tauscht Individualdaten mit dem Netzbetreiber aus. Ist i.d.R. mit dem Kartenhersteller identisch.

- **Verpacker/Logistiker:** Verpackt und versendet die personalisierten Chipkarten an den Netzbetreiber oder andere Bestimmungsorte. Kann mit dem Kartenhersteller und/oder dem Personalisierer identisch sein.

- **Netzbetreiber:** Betreibt das Kommunikationsnetz. Definiert die Personalisierung für seine Produkte, liefert alle Vorgaben an den Personalisierer, erhält Individualdaten (mindestens IMSI, K und individuelle Parameter des Authentisierungsalgorithmus) vom Personalisierer zur Einrichtung der Teilnehmerverhältnisse in seinen Datenbanken.

Am Ende des Bereitstellungsprozesses befinden sich die SIMs in den Verkaufsstellen des Netzbetreibers. Erst beim Abschluss eines Mobilfunkvertrages erfolgt im Rahmen der so genannten Aktivierung die Zuordnung zum konkreten Kunden und die Vergabe einer Rufnummer. Die Aktivierung setzt das Vorhandensein des Teilnehmerverhältnisses in den Datenbanken des Netzbetreibers voraus.

Als Nachteile dieser Prozesskette, insbesondere der zentralisierten Personalisierung, sind anzuführen:

- Spezialisierung und Individualisierung des Produktes früh in der Bereitstellungskette, der tatsächliche Bedarf kann zu diesem Zeitpunkt nur abgeschätzt werden.
- Ressourcenbindung (Datenbank- und Nummernkapazität) beim Netzbetreiber erfolgt z.T. lange vor dem eigentlichen Bedarf.
- Sehr spezielle Dienstleistung mit technisch aufwändigen Lösungen und eingeschränkter Flexibilität. Hoher Aufwand für die Betreuung des externen Personalisierers. Änderungen werden i.d.R. nach Angebot beauftragt, dann entwickelt, getestet und abgenommen, mit entsprechendem Zeitbedarf. Notwendige Flexibilität erfordert komplexe Schnittstellen.
- Erhebliche Schwierigkeiten beim Handling neuer SIM-Bauformen, etwa nicht-entnehmbare oder "Machine-to-Machine" (M2M) Varianten. Führt zu ungünstiger Spezialisierung bereits bei Vorprodukten. Innovationsbremse.
- Alternative "Soft"-Konzepte für SIMs sind bei herkömmlicher Personalisierung vollständig unmöglich.

Aus dem US-Patent 7,266,371 B1 ist ein Verfahren zur Aktivierung eines Mobilfunkendgerätes bekannt, bei dem eine SIM-Karte mit temporären Betriebsparametern, insbesondere einer temporären Teilnehmeridentifikationsnummer (IMSI) ausgerüstet wird, die einem erstmaligen Zugriff auf das Mobilfunknetz dienen. Nachdem eine Verbindung zum Mobilfunknetz mit diesen Parametern aufgebaut ist, kann der Benutzer über das Mobilfunkendgerät eine Reihe von Diensten subskribieren und eine Aktivierungsprozedur ausführen, bei der permanente Betriebsparameter, insbesondere eine permanente Teilnehmeridentifikationsnummer (IMSI) auf der SIM-Karte gespeichert wird.

Ein ähnliches Verfahren ist in der internationalen Patentanmeldung WO 03/077585 A1 und der europäischen Patentanmeldung EP 1 895 791 A1 beschrieben, wobei hier eine vorläufige Teilnehmerkennung (IMSI) vor der Inbetriebnahme zu einem Netzwerk-Management-System übertragen wird und ein Distributor von SIM-Karten diesen eine Kommunikationsadresse (MSISDN) zuordnet und diese mitsamt der Teilnehmerkennung (IMSI) ebenfalls zu dem Netzwerk-Management-System überträgt. Die SIM-Karte nimmt dann über ein Endgerät Kontakt zu dem Netzwerk-Management-System auf, wodurch dieses erneut die Kommunikationsadresse (MSISDN) und die Teilnehmerkennung (IMSI) erhält. Dieses ordnet dann der SIM-Karte eine endgültige Teilnehmerkennung zu, die dem Endgerät in einer Nachricht, insbesondere einer SMS, zugestellt wird. Das Endgerät extrahiert dann die endgültige Teilnehmerkennung und speichert sie auf der SIM-Karte.

Ferner beschreibt die internationale Patentanmeldung WO 02/058361 A1 ein Verfahren zur Aktivierung eines mobilen Endgerätes. Bei diesem Verfahren wird zusätzlich zu der oder den auf einer SIM-Karte gespeicherten temporären Kennung oder Kennungen eine temporäre elektronische Seriennummer verwendet, um das Endgerät bei dem Aktivierungsprozess zu identifizieren. Das Netzwerk erkennt, dass es sich um eine temporäre elektronische Seriennummer handelt und startet einen Aktivierungsprozess. Anschließend wird die temporäre Kennung oder werden die temporären Kennungen überschrieben.

Nachteilig ist bei den genannten Verfahren, dass neben den endgültigen Teilnehmerkennungen auch die vorläufigen Teilnehmerkennungen sowie die elektronische Seriennummer eindeutig sind und damit früh eine Ressourcenbindung erfolgt. Ferner muss eine Verwaltung der temporären Kennungen vorgenommen werden, indem diese vor der Ausgabe der SIM-Karten an die Teilnehmer einer speziellen Instanz im Netzwerk mitgeteilt werden.

Die Aufgabe der Erfindung ist es daher, ein Verfahren zur Inbetriebnahme und Personalisierung eines Teilnehmeridentifizierungsmoduls SIM derart weiterzubilden, dass es die Nachteile der Verfahren nach dem Stand der Technik überwindet, und es insbesondere gestattet, dass ohne eine frühzeitige Bindung von Ressourcen, wie beispielsweise einer Datenbank- und Nummernkapazität, eine dem aktuellen Bedarf gerecht werdende Bereitstellung personalisierter und zum Betrieb in einem Mobilfunknetz freigegebener Teilnehmeridentifizierungsmodule (SIM) jederzeit möglich ist.

Diese Aufgabe wird mit einem Verfahren gemäß Anspruch 1 gelöst. Weitere vorteilhafte Ausgestaltungen des erfindungsgemäßen Verfahrens sind in den Unteransprüchen angegeben.

Besonders vorteilhaft bei dem erfindungsgemäßen Verfahren zur Inbetriebnahme und Personalisierung eines Teilnehmeridentifizierungsmoduls, nachfolgend SIM genannt, ist es, dass das SIM vor der ersten Inbetriebnahme mit einem nicht-individuellen und vorläufigen Satz (S*) initialer Identifizierungs- und Authentisierungsparameter ausgerüstet wird, enthaltend zumindest eine nicht-individuelle und vorläufige Teilnehmeridentifikation (IMSI*) und einen nicht-individuellen und vorläufigen Geheimschlüssel (K*), wobei der Parametersatz (S*) eine erste Inbetriebnahme des SIM in einem Mobilfunknetz mittels eines Mobilfunkendgerätes gestattet, wobei nach der ersten Inbetriebnahme des SIM eine Personalisierung durchgeführt wird, indem ein individueller und endgültiger Teilnehmerdatensatz (S) übertragen und auf dem SIM gespeichert wird, enthaltend eine eindeutige endgültige Teilnehmeridentifikation (IMSI) und einen Geheimschlüssel (K), und wobei insbesondere der endgültige Teilnehmerdatensatz (S) über eine reguläre Verbindung des Mobilfunksystems unter Verwendung von (S*) übertragen wird.

Der vorläufige Satz (S*) initialer Identifizierungs- und Authentisierungsparameter enthält somit zumindest eine nicht-individuelle und vorläufige Teilnehmeridentifikation (IMSI*) und einen nicht-individuellen und vorläufigen Geheimschlüssel (K*), wobei der Parametersatz (S*) eine erste Inbetriebnahme des SIM in einem Mobilfunknetz mittels eines Mobilfunkendgerätes gestattet, d.h. dass sowohl die Teilnehmeridentifikation als auch der Geheimschlüssel als Bestandteile des vorläufigen Satzes (S*) initialer Identifizierungs- und Authentisierungsparameter nicht-individuell und nur vorläufig sind.

Hierdurch ist es zunächst möglich, eine Vielzahl von Teilnehmeridentifizierungsmodulen SIM (Subscriber Identity Module), die eine Nutzung der Dienste eines Mobilfunknetzes gestatten, mit nicht-individuellen und vorläufigen Parameterdatensätzen auszustatten, ohne dass bereits die entsprechende Anzahl von Ressourcen wie beispielsweise eindeutig zugeordnete Teilnehmeridentitäten IMSI und Mobilfunkrufnummern MSISDN zugeordnet werden müssen, da der vorläufige Parameterdatensatz eine erste Inbetriebnahme, d.h. ein Einbuchen in ein Mobilfunknetz gestattet, und sodann netzseitig die Personalisierung des SIM durchgeführt wird, indem ein endgültiger Teilnehmerdatensatz generiert, über die bestehende Funkverbindung oder über eine besonders gesicherte Funkverbindung übertragen und auf dem SIM gespeichert wird. Die endgültigen Teilnehmerdaten, die auf dem SIM gespeichert werden und der Teilnehmeridentifikation bei der Nutzung von Diensten des Mobilfunknetzes dienen, werden somit im Rahmen eines standardgemäßen (Over The Air - OTA) Prozesses zur dem SIM übertragen. Auch hierdurch werden in vorteilhafter Weise die vorhandenen Ressourcen und Netzkapazitäten genutzt.

Die vorliegende Erfindung ermöglicht die Verlagerung der Personalisierung räumlich vom externen Personalisierer in die Domäne des Netzbetreibers und zeitlich an das Ende der Bereitstellungskette in den idealen Zeitpunkt der ersten Inbetriebnahme des mobilen Endgerätes.

Durch das vorgeschlagene Verfahren gelingt es, Teilnehmerindentifizierungsmodule (SIM) für ein mobiles Kommunikationssystem vollständig ohne individuelle Daten herzustellen (abgesehen von z.B. einer fortlaufenden Seriennummer) und zur Auslieferung zu bringen. Zu diesem Zeitpunkt tragen sie stattdessen spezielle nicht-individuelle und temporäre Identifizierungsdaten, die aber trotzdem eine standardgerechte Verbindung zum Netz des Betreibers ermöglichen. Mit OTA Mechanismen erfolgt dann die individuelle Personalisierung der endgültigen Parameter des Teilnehmerverhältnisses und die weitere dedizierte Ausrüstung der SIM mit Daten und Applikationen. Die kartenseitige Gestaltung der Technik ermöglicht ferner die unbegrenzte Wiederholung des Prozesses (Repersonalisierung, auch im Rahmen eines Netzbetreiberwechsels) und jederzeitige Änderbarkeit aller relevanten Daten auf gleichem Wege. Die Vorteile sind im einzelnen:

- Die individuelle Konfiguration der SIM erfolgt zum spätestens möglichen Zeitpunkt, bis dahin bleibt die größte Flexibilität hinsichtlich des Einsatzes der SIM erhalten.
- Da keine individuelle Personalisierung im Rahmen der Kartenherstellung mehr erfolgt, kann dieser Prozessschritt ersatzlos entfallen. Die genannten Nachteile des Standes der Technik werden vermieden.
- Die Schnittstelle zum Kartenhersteller vereinfacht sich wesentlich, da keine Personalisierungsparameter mehr zu übertragen sind und keine sicherheitskritischen Individualdaten mehr zurückgeliefert werden.
- Im Rahmen der Kartenherstellung erfolgt keinerlei Einrichtung in den Datenbanken des Netzbetreibers, damit auch keine Ressourcenbindung weit vor dem eigentlichen Bedarf.
- Es ist grundsätzlich keine Speicherung von Individualdaten erforderlich, weder beim Kartenhersteller, Netzbetreiber oder einer dritten Partei.
- Moderne Alternativen zur herkömmlichen SIM werden ermöglicht und erhalten zusätzliche Attraktivität: Bei Verwendung von nicht-entnehmbaren oder "M2M"-Modulen kann die Rolle des Kartenherstellers zusätzlich eingespart werden, da der Chiphersteller direkt ausliefern kann. Bei Soft-Konzepten entfiele sogar die Rolle des Chipherstellers in der Bereitstellungskette.
- Die ohnehin vom Netzbetreiber bereitzuhaltende Infrastruktur zum gezielten OTA-Customising der SIM nach Inbetriebnahme (wenn z.B. Endgerät und Tarif des Kunden feststehen) übernimmt zusätzlich die Aufgabe der Personalisierung und wird effektiver genutzt. Dadurch entstehen Synergieeffekte.

Neuartige SIM-Bauformen, die ohnehin implizit Änderungen am tradierten Rollenmodell voraussetzen bzw. verursachen (etwa maschinell eingesetzte, eingelötete oder in Software realisierte Varianten), ihre Vorteile umso besser ausspielen können, je später sie individualisiert und spezialisiert werden. Diese Varianten gelangen i.d.R. nicht mehr in die Hände des Benutzers und werden festes Bestandteil eines Endgerätes lange bevor der Netzbetreiber bekannt ist. Weiterhin kann sich dieser während des Lebenszyklus des Endgerätes verändern. So entsteht im Rahmen der Diskussion um zukünftige Formen der SIM regelmäßig die Frage nach Repersonalisierbarkeit. Ideal wäre außerdem eine weitgehende Unabhängigkeit von einem Netzbetreiber bis zum Moment der Inbetriebnahme um eine möglichst einfache Produktion zu erlauben, ohne aufwändige Schnittstellen, die Verwaltung betreiberspezifischer Nummernräume, proprietärer Authentisierungsalgorithmen, etc. Die vorliegende Erfindung ermöglicht genau diese wichtigen Merkmale, wobei der initiale Heimatbetreiber (oder die Betreibergruppe) jederzeit feststeht aber weiter keinen Abstimmungsbedarf für individuelle Daten erfordert. Trotzdem hat der Netzbetreiber über die Ziel-Personalisierung - die niemand außer ihm vornehmen kann - weiterhin vollständige Einfluss- und Gestaltungsmöglichkeiten.

Chipkarten gemäß der Erfindung sind vorzugsweise mit einem nicht-individuellen Satz initialer Identifizierungs- und Authentisierungsparameter

$$S^*_i = \{IMSI^*_i, K^*_i, OPc^*_i, Qc^*_i, OK^*_i\} \text{ mit } i = 0, 1, \ldots, N\text{-}1 \text{ und } N << M;$$

ausgerüstet, wobei $IMSI^*_i$ die gültige Netzkennung MCC und MNC des Betreibers enthalten kann. Mit $N$ seien die Gesamtmenge der $S^*_i$ und mit $M$ die Menge der solcherart insgesamt für einen Netzbetreiber hergestellten SIM bezeichnet. Innerhalb von $M$ wiederholen sich die $S^*_i$ also $M/N$ -mal und sind damit nicht-eindeutig und nicht-individuell.

Als einziges individuelles Merkmal kann beispielsweise die übliche Seriennummer (ICCID) hinzukommen, die vom Hersteller während der Produktion fortlaufend zugeordnet wird. Wichtig ist, dass alle vom Hersteller im laufenden Produktionsprozess zuzuordnenden Daten vollautomatisch und ohne spezielle (individuelle) Vorgaben des Netzbetreibers vergeben werden.

Insbesondere erfolgt außerdem keine Speicherung oder Transfer individueller Daten beim SIM-Hersteller, Netzbetreiber oder einer dritten Partei.

Im Mobilfunknetz des Betreibers besteht eine spezielle Datenbank (THLR) der festen Größe $N$ mit den $S^*_i$ und jeweils einer fest zugeordneten Rufnummer $MSISDN^*_i$. Die Teilnehmerverhältnisse in dieser Datenbank sind unveränderlich, insbesondere besteht keine Verbindung zum Chipkartenhersteller.

Eine zugehörige SIM wird nun in einem vollständig standardgemäßen (d.h. mit keinen besonderen Vorkehrungen hinsichtlich des hier beschriebenen Verfahrens ausgerüsteten) mobilen Endgerät zum ersten Mal in Betrieb genommen. Nach der ersten Inbetriebnahme mit $S^*_i$ erfolgt die Übermittlung der endgültigen Teilnehmerdaten (S), die auf dem Teilnehmeridentifizierungsmodul SIM abgespeichert werden. Gleichzeitig werden diese endgültigen Teilnehmerdaten auch im Heimatregister HLR abgelegt. Das Teilnehmeridentifizierungsmodul SIM ist dann mit den endgültigen Daten betriebsbereit.

Vorzugsweise erfolgt bei der ersten Inbetriebnahme der Aufbau einer Verbindung zu einem Personalisierungsserver (PS) innerhalb des Mobilfunknetzes, wobei seitens des Personalisierungsservers (PS) der individuelle und endgültige Teilnehmerdatensatz (S) für die Personalisierung generiert und an das SIM übermittelt wird, insbesondere unter Verwendung der nicht-individuellen und vorläufigen Teilnehmerdaten ($S^*_i$).

Erfindungsgemäß ist die vorläufige Teilnehmeridentifikation ($IMSI^*_i$) nicht eindeutig und mehreren Teilnehmeridentifizierungsmodulen (SIM) vorläufig zugeordnet. Hierdurch ist es möglich, die vorhandenen Ressourcen zu schonen, indem Parametersätze z.B. zyklisch wieder verwendet werden, wobei die SIM jedoch anhand einer eindeutigen Identifikation, wie beispielsweise der Seriennummer, identifizierbar und unterscheidbar bleiben können.

In einer bevorzugten Ausführungsform wird vor der Durchführung der Personalisierung eine Überprüfung der Seriennummer des SIM (ICCID) und/oder des Mobilfunkendgerätes anhand der Geräteidentitätsnummer (IMEI), über die das Mobilfunkendgerät eindeutig identifizierbar ist, und/oder eine Überprüfung anderer Sicherheitsparametern des SIM durchgeführt. Hierdurch kann die Sicherheit des Verfahrens erhöht werden.

Erfindungsgemäß ist die Anzahl der möglichen nicht-individuellen und vorläufigen Teilnehmerdatensätze (S*), enthaltend zumindest eine nicht-individuelle und vorläufige Teinehmeridentifikation (IMSI*) und einen nicht-individuellen und vorläufigen Geheimschlüssel (K*), festgelegt und kleiner insbesondere sehr viel kleiner als die Anzahl der insgesamt mit diesen Datensätzen (S*) ausgerüsteten Teilnehmeridentifizierungsmodule (SIM), wobei es zu jedem Zeitpunkt viele Teilnehmeridentifizierungsmodule (SIM) mit identischen vorläufigen Daten (S*) gibt.

Besonders bevorzugt werden die nicht-individuellen und vorläufigen Teilnehmerdatensätze (S*), enthaltend zumindest eine nicht-individuelle und vorläufige Teinehmeridentifikation (IMSI*) und einen nicht-individuellen und vorläufigen Geheimschlüssel (K*), bei der initialen Ausrüstung der Teilnehmerindentifizierungsmodule (SIM) zyklisch wiederverwendet, insbesondere unabhängig davon, ob oder wie viele der SIM bereits mit individuellen und endgültigen Teilnehmerdaten (S) personalisiert wurden.

Hierdurch kann eine gleichmäßige Verteilung der vorläufigen, nicht-individuellen Teilnehmerdatensätze (S*) gewährleistet werden, sodass es nicht zu einer versehentlichen Häufung eines oder mehrerer dieser nicht-individuellen Teilnehmerdatensätze (S*) kommt. Hierdurch kann das Risiko einer Kollision durch zufällige gleichzeitige Nutzung desselben vorläufigen Teilnehmerdatensatzes bei zwei verschiedenen SIM-Karten, d.h. Teilnehmeridentifizierungsmodulen, vermindert werden.

Vorzugsweise wird nach erfolgtem Empfang und der Abspeicherung des endgültigen Teilnehmerdatensatz (S) auf dem SIM (Erhalt des Teilnehmerdatensatzes) (S) eine Bestätigung von dem Mobilfunkendgerät an das Mobilfunknetz übermittelt. Bevorzugt wird sodann ein Warmstart des Mobilfunkendgerätes unter Verwendung des neuen Teilnehmerdatensatzes (S) durchgeführt. Durch das Quittieren des korrekten Datenempfangs erhält das Mobilfunknetz eine Rückmeldung des SIM erfolgter Personalisierung sodass der Vorgang abgeschlossen werden kann.

Vorzugsweise wird der bei der Personalisierung generierte endgültige Teilnehmerdatensatz (S) im Heimatregister (HLR) gespeichert. Die Speicherung des Teilnehmerdatensatzes (S) und der zugehörigen Teilnehmerdaten im Heimatregister (HLR) gestattet die Nutzung der Dienste des Mobilfunknetzes.

Das Teilnehmerverhältnis kann dabei zunächst mit spezifischen Diensteinschränkungen versehen sein, die erst später, nach Feststellung der Kundendaten, Dienstewünsche, etc., entfernt werden.

Vorzugsweise wird bei der erstmaligen Inbetriebnahme mit dem Parametersatz (S*) das durch die (IMSI*) gegebene Teilnehmerverhältnis netzseitig auf einen Status "in Benutzung" gesetzt, während dessen nur eine eingeschränkte Nutzung freigegeben ist, insbesondere die Durchführung der Personalisierung, wobei nach erfolgter Personalisierung des SIM mit dem individuellen und endgültigen Teilnehmerdatensatz (S) das durch die (IMSI*) gegebene Teilnehmerverhältnis auf einen Status "freigegeben" gesetzt wird, der die erneute Nutzung des durch (IMSI*) gegebenen Teilnehmerverhältnisses durch ein anderes Teilnehmeridentifizierungsmodul SIM gestattet.

Besonders bevorzugt erfolgt bei einem Inbetriebnahmeversuch eines oder mehrerer weiterer SIM mit einem identischen vorläufigen Parametersatz (S*) einer bereits in das Mobilfunknetz eingebuchten ersten SIM eine Einreihung in eine Warteschlange und eine Bearbeitung nach dem Zeitrang der Inbetriebnahmeversuche. Vorzugsweise wird bei einem Inbetriebnahmeversuch eines oder mehrerer weiterer Teilnehmeridentifizierungsmodule (SIM) mit einer zu einem bereits in das Mobilfunknetz zur Personalisierung eingebuchten ersten Teilnehmeridentifizierungsmodul (SIM) identischen vorläufigen Teilnehmeridentifikation (IMSI*) eine eventuelle Blockade des Personalisierungsvorgangs (Ausbleiben der Personalisierungsdaten) vom Teilnehmeridentifizierungsmodul (SIM) erkannt und führt zur automatischen Wiederholung der Personalisierungsanfrage.

Vorzugsweise wird bei einem Inbetriebnahmeversuch eines oder mehrerer weiterer Teilnehmeridentifizierungsmodule (SIM) mit einer zu einem bereits in das Mobilfunknetz zur Personalisierung eingebuchten ersten Teilnehmeridentifizierungsmodul (SIM) identischen vorläufigen Teilnehmeridentifikation (IMSI*) eine eventuelle Fehlleitung der Personalisierungsdaten vom Teilnehmeridentifizierungsmodul (SIM) erkannt, die Daten werden verworfen und es erfolgt eine automatische Wiederholung der Personalisierungsanfrage.

Besonders bevorzugt erfolgt bei ausbleibender Bestätigung des Mobilfunkendgerätes an das Mobilfunknetz automatisch ein erneuter Versand der Personalisierungsdaten. Vorzugsweise erfolgt erst nach Bestätigung des Mobilfunkendgerätes an das Mobilfunknetz die Speicherung des endgültigen Teilnehmerdatensatz (S) im Heimatregister (HLR).

Vorzugsweise erfolgt erst nach Bestätigung des Mobilfunkendgerätes an das Mobilfunknetz die Aktivierung und/oder Freischaltung des durch den endgültigen Teilnehmerdatensatz (S) im Heimatregister (HLR) gekennzeichneten Teilnehmerverhältnisses (Subskription).

Besonders bevorzugt sind die endgültigen Teilnehmerdatensätze (S) im Heimatregister (HLR) bereits kurzfristig auf Vorrat angelegt. Hierdurch ist gewährleistet, dass eine Personalisierung von Teilnehmeridentifizierungsmodulen (SIM-Karten) jederzeit kurzfristig erfolgen kann.

Vorzugsweise sind die durch die endgültigen Teilnehmerdatensätze (S) im Heimatregister (HLR) gekennzeichneten Teilnehmerverhältnisse (Subskriptionen) bereits kurzfristig auf Vorrat angelegt.

Besonders bevorzugt sind die durch die endgültigen Teilnehmerdatensätze (S) im Heimatregister (HLR) gekennzeichneten Teilnehmerverhältnisse (Subskriptionen) mit spezifischen Diensteinschränkungen versehen.

Vorzugsweise erfolgen im Anschluss an die erfolgte Personalisierung automatisch weitere Ladevorgänge zur Ausgestaltung der SIM-Karte mit besonderen Eigenschaften und/oder Diensten.

Vorzugsweise wird im Anschluss an die erfolgte Personalisierung automatisch ein maschineller oder persönlicher Dialog, vorzugsweise über das Mobilfunkendgerät, mit dem Kunden zur Ermittlung der Kundendaten, Dienstewünsche, etc. gestartet und insbesondere werden erst danach eventuelle spezifische Diensteinschränkungen entfernt.

Ein Ausführungsbeispiel des erfindungsgemäßen Verfahrens ist in den Figuren dargestellt und wird nachfolgend erläutert. Es zeigen:

Fig. 1    ein Ausführungsbeispiel des erfindungsgemäßen Verfahrens der OTA-Personalisierung eines Teilnehmeridentifizierungsmoduls SIM;

Fig. 2    das Schema bei der gleichzeitigen Inbetriebnahme mehrerer SIM, insbesondere mit identischem vorläufigen Parametersatz.

Chipkarten (SIM) sind mit einem nicht-individuellen Satz initialer Identifizierungs- und Authentisierungsparameter

$S^*_i = \{IMSI^*_i, K^*_i, OPc^*_i, Qc^*_i, OK^*_i\}$ mit $i = 0, 1, ..., N\text{-}1$ und $N \ll M;$ ausgerüstet, wobei $IMSI^*_i$ die gültige Netzkennung MCC und MNC des Betreibers enthält. Mit $N$ seien die Gesamtmenge der $S^*_i$ und mit M die Menge der solcherart insgesamt für einen Netzbetreiber hergestellten SIM bezeichnet. Innerhalb von $M$ wiederholen sich die $S^*_i$ also $M/N$ -mal und sind damit nicht-eindeutig und nicht-individuell.

Als einziges individuelles Merkmal kommt die übliche Seriennummer (ICCID) hinzu, die vom Hersteller während der Produktion fortlaufend zugeordnet wird. Wichtig ist, das alle vom Hersteller im laufenden Produktionsprozess zuzuordnenden Daten vollautomatisch und ohne spezielle (individuelle) Vorgaben des Netzbetreibers vergeben werden.

Im Mobilfunknetz des Betreibers besteht eine spezielle Datenbank (THLR) der festen Größe $N$ mit den $S^*_i$ und jeweils einer fest zugeordneten Rufnummer $MSISDN^*_i$. Die Teilnehmerverhältnisse in der Datenbank sind unveränderlich, insbesondere besteht keine Verbindung zum Chipkartenhersteller.

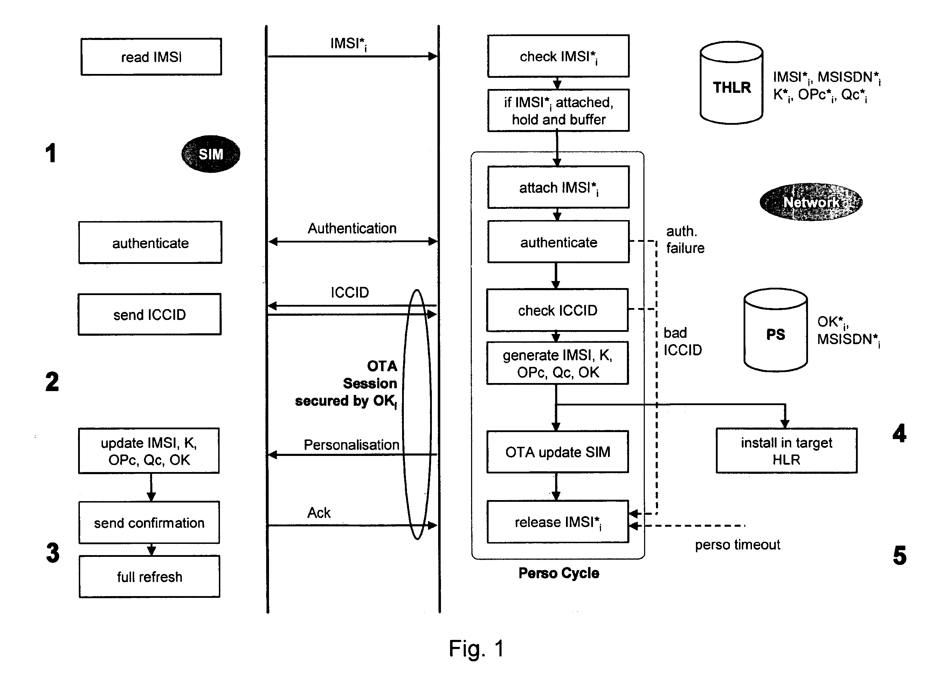

Eine zugehörige SIM wird nun in einem vollständig standardgemäßen (d.h. mit keinen besonderen Vorkehrungen hinsichtlich des vorliegenden Vorschlags ausgerüsteten) mobilen Endgerät zum ersten Mal in Betrieb genommen. Unter Vereinfachung der sonstigen Systemvorgänge beim Einbuchen in ein Mobilfunknetz erfolgt die Personalisierung gemäß der Darstellung nach Fig. 1:

(1) Die $IMSI^*_i$ wird vom mobilen Endgerät gelesen und standardgemäß an das empfangene Mobilfunknetz, von diesem ggf. weiter an das Heimatnetz und darin an das THLR übertragen. Die dazu notwendige Routing-Information wird der $IMS^*_i$ entnommen. Die $IMSI^*_i$ ist im THLR bekannt und es wird entsprechend des normalen Protokolls die Authentisierung zwischen Karte und THLR mit den Daten $S^*_i$ veranlasst. Das Ergebnis ist positiv und das Teilnehmerverhältnis geht standardgemäß in den Zustand, in dem ein beiderseitiger Verbindungsaufbau möglich ist. Als Sonderfunktion versieht das THLR die $IMSI^*_i$ zu einem frühestens möglichen Zeitpunkt mit dem Status "in Benutzung". Dieser Status bleibt bis zur Freigabe der $IMSI^*_i$, entweder durch ordentlichen Abschluss der nachfolgenden Personalisierung oder Eintritt eines Sonderfalls (siehe unten), bestehen.

(2) Netzseitig wird nun die OTA-Personalisierung gestartet, d.h. die Übermittlung der personalisierten Teilnehmerdaten über eine Funkverbindung, indem dem Personalisierungs-Server PS der Index $i$ übergeben wird. Der PS kennt zum Index $i$ die passende $MSISDN^*_i$ und den OTA-Schlüssel $OK^*_i$. Damit baut er nun eine sichere OTA-Session nach dem Stand der Technik zur betreffenden SIM auf.

Es kann nun zunächst z.B. die *ICCID* der Karte oder *die IMEI* des Gerätes geprüft werden (beispielsweise mittels eines Black- oder White-Listing) und/oder weitere Sicherheitsparameter der Karte abgefragt werden (z.B. ein Zertifikat) bevor die eigentliche Personalisierung startet. Dazu werden endgültige Teilnehmerdaten

$$S = \{IMSI, K, OPc, Qc, OK\}$$

im PS generiert, über den bestehenden OTA-Kanal zur SIM gesendet und dort gespeichert - die Karte damit individuell personalisiert.

(3) Der Vorgang wird kartenseitig geeignet unterstützt und derart abgesichert, dass Verbindungsfehler oder ein nur teilweiser Empfang nicht zu einer unvollständigen (damit ungültigen) Personalisierung führen können. Erst nach komplettem und korrektem Empfang und der Speicherung aller notwendigen Daten quittiert die SIM den Vorgang an den PS und veranlasst abschließend einen Warmstart (Full Refresh) des Endgerätes, nun mit den endgültigen Teilnehmerdaten S.

(4) Parallel zur Personalisierung der SIM veranlasst der PS die Einrichtung des Teilnehmerverhältnisses S im endgültigen HLR. Damit ist beidseitig ein Zustand erreicht wie nach der herkömmlichen Personalisierung und Einrichtung. Die SIM ist jetzt für den Standardbetrieb einsetzbar.

Vorzugsweise kann die Speicherung und Aktivierung der endgültigen Teilnehmerverhältnisse S im Heimatregister HLR erst nach Erhalt der Quittung der SIM an das Mobilfunknetz erfolgen und vorläufig mit spezifischen Diensteinschränkungen versehen werden.

Zur Beschleunigung des Vorgangs können die endgültigen Teilnehmerverhältnisse S im HLR bereits kurzfristig auf Vorrat angelegt sein, beispielsweise indem der PS regelmäßig eine Anzahl der Teilnehmerverhältnisse S für den zeitnahen Bedarf (z.B. für die nächste Stunde oder den nächsten Tag) vorausblickend im HLR speichert und aktiviert.

(5) Die in (3) erhaltene Quittung der SIM führt im PS und THLR zur sofortigen Freigabe des Teilnehmerverhältnisses $S^*_i$, insbesondere der $IMSI_i^*$. Sie wechselt aus dem Zustand "in Benutzung" in den Zustand "frei" und ist damit bereit zur nächsten Benutzung.

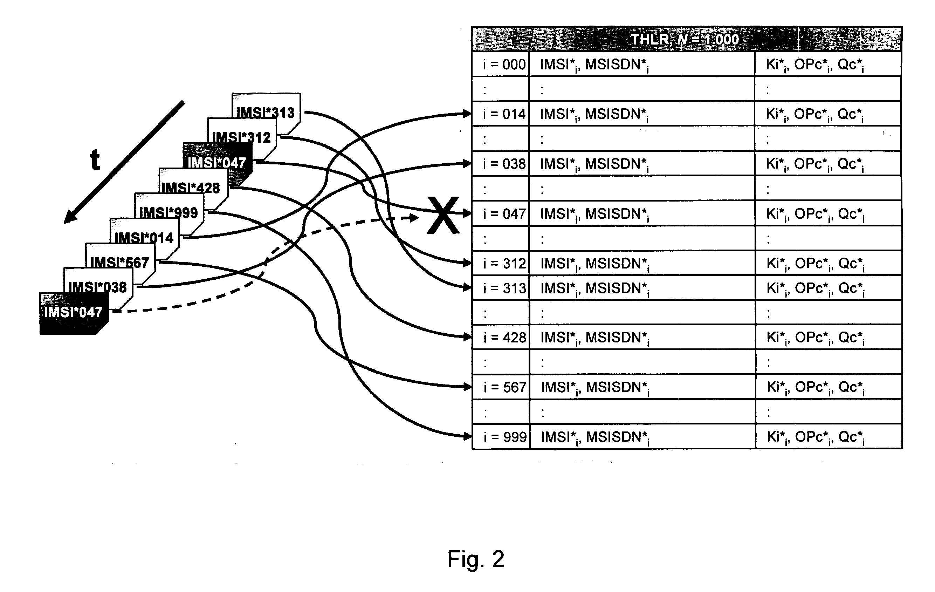

Tatsächlich ist wegen der Nicht-Eindeutigkeit der Parameterdatensätze $S_i^*$ und der Zufälligkeit der Inbetriebnahmen, auch bei Gleichverteilung der $S_i$ in der produzierten Gesamtmenge (die durch einfaches Hochzählen von $i$ während der Produktion erreicht wird), mit Kollisionen bei der OTA-Personalisierung zu rechnen. Dies ist dann der Fall, wenn während der Bearbeitung des Teilnehmerverhältnisses $S_i^*$, d.h. wenn die $IMSI_i^*$ als "in Benutzung" gekennzeichnet ist, ein zweiter oder sogar weitere Einbuchversuche anderer SIM mit identische Parameterdatensatz $S_i^*$ erfolgt. Dieser Fall ist in Fig. 2 dargestellt. Solche Kollisionen stellen jedoch einen regulären Betriebsfall dar, der wie folgt berücksichtigt wird:

- Nicht gleich bearbeitbare Einbuchversuche mit $IMSI_i^*$ werden in eine Warteschlange eingereiht und in der Reihenfolge des Eingangs abgearbeitet.

- Die Anzahl $N$ der Parametersätze $S_i^*$ ist so zu wählen, dass die Wahrscheinlichkeit einer Kollision (und erst recht einer Mehrfachkollision) hinreichend klein wird. Da nach wie vor $N \ll M$ gilt, bleiben die Vorteile des vorliegenden Vorschlags selbst bei $N = 1.000$ oder $N = 10.000$ vollständig erhalten.

- Die Geschwindigkeit der OTA Personalisierung ist durch optimierte Systeme so zu gestalten, dass der Zeitraum, in dem eine $IMSI_i^*$ in Benutzung ist, möglichst klein wird.

- Fehlerfälle während des Personalisierungszyklus, etwa bei Ausbleiben der Quittung der SIM, sind durch Time-Out zu begrenzen, so dass die $IMSI_i^*$ möglichst umgehend wieder frei gegeben wird.

- Eine eventuelle Blockade des Personalisierungsvorgangs (Ausbleiben der Personalisierungsdaten) wird vom SIM erkannt und führt zur automatischen Wiederholung der Personalisierungsanfrage.

- Eine eventuelle Fehlleitung der Personalisierungsdaten wird vom SIM erkannt, die Daten werden verworfen und es erfolgt eine automatische Wiederholung der Personalisierungsanfrage.

- Bei eventuell ausbleibender Quittung der SIM an das Mobilfunknetz kann automatisch ein erneuter Versand der Personalisierungsdaten erfolgen.

An den Personalisierungsprozess schließt sich automatisch ein Warmstart und Einbuchversuch mit den endgültigen Teilnehmerdaten an. Es kann nun ohne Zeitdruck in einem neuen OTA-Prozess die weitere kartenseitige Konfiguration des Teilnehmerverhältnis vorgenommen werden.

Dies betrifft die weitere Ausgestaltung der SIM Karte mit besonderen Eigenschaften und Diensten, sowie die Ermittlung der Kundendaten und Dienstewünsche mittels persönlichen oder maschinellen Dialogs, vorzugsweise über das Mobilfunkendgerät. Ggf. zuvor vorhandene spezielle Diensteinschränkungen werden abschließend entfernt.

Die Anwendung des vorgeschlagenen Konzeptes ist nicht auf den OTA-Kanal begrenzt (der jedoch für die Anwendung in Mobilfunknetzen am interessantesten sein dürfte), sondern auch in leitungsgebundenen Varianten denkbar. Etwa wenn die Personalisierung zwar dezentral, aber noch in den Verkaufspunkten (POS) des Netzbetreibers oder des Anbieters erfolgen soll. Über Internet und einen angeschlossen Kartenleser ist dies sogar an jedem beliebigen Ort denkbar. Die Prinzipien, wie z.B. die Wiederverwendung der $IMSI_i$*, gelten dabei unverändert, ebenso wie die gegenüber dem Stand der Technik zu erzielenden Vorteile. Stichwortartig sind hier folgende beispielhafte vorteilhafte Ausgestaltungen angeführt:

- alle Systeme, z.B. GSM, UMTS, IMS, WLAN, WIMAX, LTE/SAE/EPS, NGMN, NGN, CDMA
- alle Chipkarten der Telekommunikation, z.B. UICC, SIM, USIM, ISIM, RUIM und zukünftige
- alle Formfaktoren, z.B. ID-1, ID-000, MiniUICC, M2M, IFF und zukünftige
- alle Ausführungsformen, z.B. removable, semi-removable, non-removable, soft
- alle OTA-Kanäle, z.B SMS, BIP/CAT-TP, TCP/IP, auch RDM
- alle leitungsgebundenen Kanäle z.B. LAN, WAN, Internet
- alle Endgeräte, z.B mobile oder feste Telefone, PCs und Notebook PCs, Datenmodule
- alle dezentralen Kartenleser z.B. am POS
- alle Umfänge, z.B. von (IMSI, K) bis kompl. Perso/Individualisierung und Software-Download
- mit zusätzlicher Absicherung durch PKI-Verfahren, Zertifikate und/oder Personalisierungskennwort
- mit Ableitung bestimmter Parameter
- mit Bewertung der IMEI (gerätespezifische Personalisierung)
- mit Bewertung der ICCID (kartenspezifische Personalisierung)
- als Dienstleistung durch 3. Partei
- als initiale Personalisierung oder Repersonalisierung, auch mit Netzbetreiberwechsel
- integriert in On-Line Dialog inkl. Vertragsabschluß und Aktivierung

Übersicht bzw. Übersetzungen der verwendeten Begriffe und deren international übliche Benennung und Abkürzung:

- Teilnehmeridentifizierungsmodul (Subscriber Identity Modul, SIM)
- Teilnehmeridentifikation (International Mobile Subscriber Identity, IMSI)
- Geräteidentitätsnummer (International Mobile Equipment Identity, IMEI)
- Mobilfunknummer (Mobile Subscriber Integrated Services Digital Network Number, MSISDN)
- Seriennummer des SIM (ICCID)
- Funkverbindung zur SIM (Over The Air, OTA)
- Heimatregister bzw. temporäres Heimatregister (Home Location Register, HLR bzw. THLR)
- Maschine-Maschine Kommunikation (Machine to Machine, M2M)
- Read - Lesen
- Check - Prüfung, Überprüfung, prüfen
- Network - Netzwerk
- Attach, Attached - Anfügen, Angefügt
- Hold and buffer - zwischenspeichern
- Authenticate, Authentication - Authentifizieren, Authentifzierung
- Auth. - Abkürzung für Authenticate, Authentication

- Bad - mangelhaft
- Failure - Fehler
- Send - Senden, übermitteln
- Update - Aktualisierung
- Generate - Generieren
- Session - Sitzung
- Secured - abgesichert
- Release - Ausgabe, ausgeben
- Personalisation - Personalisierung
- Perso Cycle - Personalisierungsprozess
- Install - Installieren
- Target - Ziel, Zielbereich
- Confirmation - Bestätigung
- Full refresh - vollständige Aktualiserung, vollständig aktualisieren
- Ack - Abkürzung für Acknowledgement - Rückmeldung
- Timeout - Zeitüberschreitung

**Patentansprüche**

1. Verfahren zur Inbetriebnahme und Personalisierung von Teilnehmeridentifizierungsmodulen in einem Mobilfunknetz, bei dem eine Vielzahl von Teilnehmeridentifizierungsmodulen vor einer ersten Inbetriebnahme mit identischen, nicht-individuellen, nicht eindeutigen vorläufigen Parameterdatensätzen initialer Identifizierungs- und Authentisierungsparameter ausgerüstet werden, enthaltend zumindest eine nicht-individuelle und vorläufige Teilnehmeridentifikation und einen nicht-individuellen und vorläufigen Geheimschlüssel, wobei die Parameterdatensätze die erste Inbetriebnahme der Teilnehmeridentifizierungsmodule in dem Mobilfunknetz mittels eines Mobilfunkendgerätes gestatten und die Anzahl der Parameterdatensätze kleiner ist als die Anzahl der insgesamt mit den Parameterdatensätzen ausgerüsteten Teilnehmeridentifizierungsmodulen, wobei nach der ersten Inbetriebnahme eines der Teilnehmeridentifizierungsmodule eine Personalisierung durchgeführt wird, indem ein individueller und endgültiger Teilnehmerdatensatz übertragen und auf dem Teilnehmeridentifizierungsmodul gespeichert wird, enthaltend eine eindeutige endgültige Teilnehmeridentifikation und einen Geheimschlüssel.

2. Verfahren nach Anspruch 1, **dadurch gekennzeichnet, dass** bei der ersten Inbetriebnahme der Aufbau einer Verbindung zu einem Personalisierungsserver innerhalb des Mobilfunknetzes erfolgt, wobei seitens des Personalisierungsservers der individuelle und endgültige Teilnehmerdatensatz für die Personalisierung generiert und an das Teilnehmeridentifizierungsmodul übermittelt wird, insbesondere unter Verwendung des nicht-individuellen und vorläufigen Parameterdatensatzes.

3. Verfahren nach Anspruch 1 oder 2, **dadurch gekennzeichnet, dass** vor der Durchführung der Personalisierung eine Überprüfung der Seriennummer des Teilnehmeridentifizierungsmoduls und/oder der Geräteidentitätsnummer, über die das Mobilfunkendgerät eindeutig identifizierbar ist, und/oder eine Überprüfung von weiteren Sicherheitsparametern des Teilnehmeridentifizierungsmoduls durchgeführt wird.

4. Verfahren nach einem der vorherigen Ansprüche, **dadurch gekennzeichnet, dass** der endgültige Teilnehmerdatensatz über eine OTA-Funkverbindung des Mobilfunksystems unter Verwendung des vorläufigen Parameterdatensatzes übertragen wird.

5. Verfahren nach einem der vorherigen Ansprüche, **dadurch gekennzeichnet, dass** die nicht-individuellen und vorläufigen Teilnehmerdatensätze bei der initialen Ausrüstung der Teilnehmeridentifizierungsmodule zyklisch wiederverwendet werden, insbesondere unabhängig davon, ob oder wie viele der Teilnehmeridentifizierungsmodule bereits mit individuellen und endgültigen Teilnehmerdatensätzen personalisiert wurden.

6. Verfahren nach einem der vorherigen Ansprüche, **dadurch gekennzeichnet, dass** der bei der Personalisierung generierte Teilnehmerdatensatz und die zugehörigen Teilnehmerdaten erst bei der ersten Inbetriebnahme des Teilnehmeridentifizierungsmoduls in einem Heimatregister gespeichert wird.

7. Verfahren nach einem der vorherigen Ansprüche, **dadurch gekennzeichnet, dass** nach erfolgtem Empfang und der Abspeicherung des individuellen und endgültigen Teilnehmerdatensatz auf dem Teilnehmeridentifizierungsmodul eine Bestätigung von dem Mobilfunkendgerät an das Mobilfunknetz übermittelt wird, insbesondere dass ein Warmstart des Mobilfunkendgerätes unter Verwendung des Teilnehmerdatensatzes durchgeführt wird.

8. Verfahren nach einem der vorherigen Ansprüche, **dadurch gekennzeichnet, dass** bei der erstmaligen Inbetriebnahme mit dem nicht-individuellen und vorläufigen Parameterdatensatz das durch die vorläufige Teilnehmeridentifikation gegebene Teilnehmerverhältnis netzseitig auf einen Status "in Benutzung" gesetzt wird, während dessen nur eine eingeschränkte Nutzung freigegeben ist, und dass nach erfolgter Personalisierung des Teilnehmeridentifizierungsmoduls mit dem individuellen und endgültigen Teilnehmerdatensatz das durch die vorläufige Teilnehmeridentifikation gegebene Teilnehmerverhältnis auf einen Status "freigegeben" gesetzt wird, der die erneute Nutzung des durch die vorläufige Teilnehmeridentifikation gegebenen Teilnehmerverhältnisses durch ein anderes Teilnehmeridentifizierungsmodul gestattet.

9. Verfahren nach einem der vorherigen Ansprüche, **dadurch gekennzeichnet, dass** bei einem Inbetriebnahmeversuch eines oder mehrerer weiterer Teilnehmeridentifizierungsmodule mit einer zu einem bereits in das Mobilfunknetz zur Personalisierung eingebuchten ersten Teilnehmeridentifizierungsmodul identischen vorläufigen Teilnehmeridentifikation eine Einreihung in eine Warteschlange und eine Bearbeitung nach dem Zeitrang der Inbetriebnahmeversuche erfolgt.

10. Verfahren nach einem der vorherigen Ansprüche, **dadurch gekennzeichnet, dass** bei einem Inbetriebnahmeversuch eines oder mehrerer weiterer Teilnehmeridentifizierungsmodule mit einer zu einer bereits in das Mobilfunknetz zur Personalisierung eingebuchten ersten Teilnehmeridentifizierungsmodul identischen vorläufigen Teilnehmeridentifikation eine eventuelle Blockade des Personalisierungsvorgangs vom Teilnehmeridentifizierungsmodul erkannt wird und zur automatischen Wiederholung der Personalisierungsanfrage führt.

11. Verfahren nach einem der vorherigen Ansprüche, **dadurch gekennzeichnet, dass** bei einem Inbetriebnahmeversuch eines oder mehrerer weiterer Teilnehmeridentifizierungsmodule mit einer zu einer bereits in das Mobilfunknetz zur Personalisierung eingebuchten ersten Teilnehmeridentifizierungsmodul identischen vorläufigen Teilnehmeridentifikation eine eventuelle Fehlleitung der Personalisierungsdaten vom Teilnehmeridentifizierungsmodul erkannt wird, die Daten verworfen werden und eine automatischen Wiederholung der Personalisierungsanfrage erfolgt.

12. Verfahren nach Anspruch 7oder nach einem der auf Anspruch 7 rückbezogenen Ansprüche 8 bis 11, **dadurch gekennzeichnet, dass** bei ausbleibender Bestätigung des Mobilfunkendgerätes an das Mobilfunknetz automatisch ein erneuter Versand des Teilnehmerdatensatzes erfolgt.

13. Verfahren nach Anspruch 6 und 7 oder nach einem der auf Ansprüche 6 und 7 rückbezogenen Ansprüche 8 bis 12, **dadurch gekennzeichnet, dass** erst nach Bestätigung des Mobilfunkendgerätes an das Mobilfunknetz die Speicherung des endgültigen Teilnehmerdatensatzes im Heimatregister erfolgt.

14. Verfahren nach Anspruch 6 und 7 oder nach einem der auf Ansprüche 6 und 7 rückbezogenen Ansprüche 8 bis 13, **dadurch gekennzeichnet, dass** erst nach Bestätigung des Mobilfunkendgerätes an das Mobilfunknetz die Aktivierung und/oder Freischaltung des durch den endgültigen Teilnehmerdatensatz im Heimatregister gekennzeichneten Teilnehmerverhältnis erfolgt.

15. Verfahren nach Anspruch 6 oder nach einem der auf Anspruch 6 rückbezogenen Ansprüche 7 bis 14, **dadurch gekennzeichnet, dass** die endgültigen Teilnehmerdatensätze im Heimatregister bereits auf Vorrat angelegt sind.

16. Verfahren nach Anspruch 6 oder nach einem der auf Anspruch 6 rückbezogenen Ansprüche 7 bis 15, **dadurch gekennzeichnet, dass** die durch die endgültigen Teilnehmerdatensätze im Heimatregister gekennzeichneten Teilnehmerverhältnisse bereits auf Vorrat angelegt sind.

17. Verfahren nach Anspruch 6 oder nach einem der auf Anspruch 6 rückbezogenen Ansprüche 7 bis 16, **dadurch gekennzeichnet, dass** die durch die endgültigen Teilnehmerdatensätze im Heimatregister gekennzeichneten Teilnehmerverhältnisse mit spezifischen Diensteinschränkungen versehen sind.

18. Verfahren nach einem der vorherigen Ansprüche, **dadurch gekennzeichnet, dass** im Anschluss an die erfolgte Personalisierung automatisch weitere Ladevorgänge zur Ausgestaltung des Teilnehmeridentifizierungsmoduls mit besonderen Eigenschaften und/oder Diensten erfolgen.

**19.** Verfahren nach einem der vorherigen Ansprüche, **dadurch gekennzeichnet, dass** im Anschluss an die erfolgte Personalisierung automatisch ein maschineller oder persönlicher Dialog über das Mobilfunkendgerät mit dem Kunden zur Ermittlung der Kundendaten und/oder Dienstewünsche gestartet wird.

**Claims**

**1.** Method for starting up and personalizing subscriber identification modules in a mobile radio network, in which a multiplicity of subscriber identification modules are equipped, prior to first start-up, with identical, non-individual, non-explicit provisional parameter data records of initial identification and authentication parameters, containing at least a non-individual and provisional subscriber identification and a non-individual and provisional secret key, wherein the parameter data records permit the first start-up of the subscriber identification modules in the mobile radio network by means of a mobile radio terminal and the number of parameter data records is smaller than the number of subscriber identification modules equipped with the parameter data records in total, wherein the first start-up of one of the subscriber identification modules is followed by personalization being performed by virtue of an individual and final subscriber data record being transmitted and being stored on the subscriber identification module, containing an explicit final subscriber identification and a secret key.

**2.** Method according to Claim 1, **characterized in that** the first start-up prompts the set-up of a connection to a personalization server within the mobile radio network to take place, wherein the personalization server generates the individual and final subscriber data record for the personalization and transmits it to the subscriber identification module, particularly using the non-individual and provisional parameter data record.

**3.** Method according to Claim 1 or 2, **characterized in that** prior to the performance of the personalization a check on the serial number of the subscriber identification module and/or on the device identity number that can be used to explicitly identify the mobile radio terminal and/or a check on further security parameters of the subscriber identification module is/are performed.

**4.** Method according to one of the preceding claims, **characterized in that** the final subscriber data record is transmitted via an OTA radio link of the mobile radio system using the provisional parameter data record.

**5.** Method according to one of the preceding claims, **characterized in that** the non-individual and provisional subscriber data records are reused cyclically during the initial equipment of the subscriber identification modules, particularly regardless of whether or how many of the subscriber identification modules have already been personalized with individual and final subscriber data records.

**6.** Method according to one of the preceding claims, **characterized in that** the subscriber data record generated during the personalization and the associated subscriber data are stored in a home location register only when the subscriber identification module is first started up.

**7.** Method according to one of the preceding claims, **characterized in that** after reception and storage of the individual and final subscriber data record on the subscriber identification module has taken place a confirmation is transmitted from the mobile radio terminal to the mobile radio network, particularly that a warm start for the mobile radio terminal is performed using the subscriber data record.

**8.** Method according to one of the preceding claims, **characterized in that** the start-up for the first time with the non-individual and provisional parameter data record prompts the subscriber relationship provided by the provisional subscriber identification to be set to an "in use" status on the network, during which only restricted use is enabled, and **in that** after personalization of the subscriber identification module with the individual and final subscriber data record has taken place the subscriber relationship provided by the provisional subscriber identification is set to an "enabled" status that permits fresh use of the subscriber relationship provided by the provisional subscriber identification by another subscriber identification module.

**9.** Method according to one of the preceding claims, **characterized in that** a start-up attempt by one or more further subscriber identification modules with a provisional subscriber identification that is identical to that of a first subscriber identification module already registered in the mobile radio network for personalization purposes prompts a queue to be joined and processing on the basis of the priority of the start-up attempts to take place.

10. Method according to one of the preceding claims, **characterized in that** a start-up attempt by one or more further subscriber identification modules with a provisional subscriber identification that is identical to that of a first subscriber identification module already registered in the mobile radio network for personalization purposes prompts any blocking of the personalization process to be recognised by the subscriber identification module and to result in automatic repetition of the personalization request.

11. Method according to one of the preceding claims, **characterized in that** a start-up attempt by one or more further subscriber identification modules with a provisional subscriber identification that is identical to that of a first subscriber identification module already registered in the mobile radio network for personalization purposes prompts any misdirection of the personalization data to be recognised by the subscriber identification module, the data to be rejected and automatic repetition of the personalization request to take place.

12. Method according to Claim 7 or according to one of Claims 8 to 11 that refer back to Claim 7, **characterized in that** in the absence of confirmation from the mobile radio terminal to the mobile radio network the subscriber data record is automatically resent.

13. Method according to Claims 6 and 7 or according to one of Claims 8 to 12 that refer back to Claims 6 and 7, **characterized in that** the final subscriber data record is stored in the home location register only after confirmation from the mobile radio terminal to the mobile radio network.

14. Method according to Claims 6 and 7 or according to one of Claims 8 to 13 that refer back to Claims 6 and 7, **characterized in that** the subscriber relationship **characterized by** the final subscriber data record in the home location register is activated and/or enabled only after confirmation from the mobile radio terminal to the mobile radio network.

15. Method according to Claim 6 or according to one of Claims 7 to 14 that refer back to Claim 6, **characterized in that** the final subscriber data records in the home location register have already been created in stock.

16. Method according to Claim 6 or according to one of Claims 7 to 15 that refer back to Claim 6, **characterized in that** the subscriber relationships **characterized by** the final subscriber data records in the home location register have already been created in stock.

17. Method according to Claim 6 or according to one of Claims 7 to 16 that refer back to Claim 6, **characterized in that** the subscriber relationships **characterized by** the final subscriber data records in the home location register are provided with specific service restrictions.

18. Method according to one of the preceding claims, **characterized in that** the personalization that has taken place is automatically followed by further loading processes taking place for the purpose of shaping the subscriber identification module with particular properties and/or services.

19. Method according to one of the preceding claims, **characterized in that** the personalization that has taken place is automatically followed by an automatic or personal dialogue being started with the customer via the mobile radio terminal for the purpose of ascertaining the customer data and/or service requirements.

**Revendications**

1. Procédé pour la mise en fonctionnement et la personnalisation de modules d'identification d'abonnés dans un réseau cellulaire, dans lequel une pluralité de modules d'identification d'abonnés sont dotés, avant une première mise en fonctionnement, d'ensembles de données de paramètres identiques, non individuels, non uniques préalables de paramètres initiaux d'identification et d'authentification, comportant au moins une identification d'abonné non individuelle préalable et une clé secrète non individuelle et préalable, dans lequel les ensembles de données de paramètres permettent la première mise en fonctionnement des modules d'identification d'abonnés dans le réseau cellulaire au moyen d'un terminal mobile et le nombre des ensembles de données de paramètres est inférieur au nombre total des modules d'identification d'abonnés dotés des ensembles de données de paramètres, dans lequel, après la première mise en fonctionnement de l'un des modules d'identification d'abonnés, une personnalisation est effectuée en transmettant un ensemble de données d'abonnés individuel et définitif et en le stockant dans le module d'identification d'abonné, lequel ensemble comporte une identification d'abonné définitive unique et une clé secrète.

**2.** Procédé selon la revendication 1, **caractérisé en ce que**, lors de la première mise en fonctionnement, il est procédé à l'établissement d'une connexion à un serveur de personnalisation au sein du réseau cellulaire, dans lequel, du côté du serveur de personnalisation, l'ensemble de données d'abonnés individuel et définitif est généré pour la personnalisation et est transmis au module d'identification d'abonné en utilisant notamment l'ensemble de données de paramètres non individuel et préalable.

**3.** Procédé selon la revendication 1 ou 2, **caractérisé en ce que**, avant d'effectuer la personnalisation, il est procédé à une vérification du numéro de série du module d'identification d'abonné et/ou du numéro d'identité de l'appareil, au moyen desquels le terminal mobile peut être identifié de manière unique, et/ou il est procédé à une vérification d'autres paramètres de sécurité du module d'identification d'abonné.

**4.** Procédé selon l'une quelconque des revendications précédentes, **caractérisé en ce que** l'ensemble de données d'abonnés définitif est transmis par l'intermédiaire d'une liaison radio OTA du système cellulaire en utilisant l'ensemble de données de paramètres préalable.

**5.** Procédé selon l'une quelconque des revendications précédentes, **caractérisé en ce que** les ensembles de données d'abonnés non individuels et préalables sont réutilisés de manière cyclique lors de la mise en place initiale des modules d'identification d'abonnés, notamment d'une manière indépendante du fait de savoir si ou combien des modules d'identification d'abonnés ont déjà été personnalisés avec des ensembles de données d'abonnés individuels et définitifs.

**6.** Procédé selon l'une quelconque des revendications précédentes, **caractérisé en ce que** l'ensemble de données d'abonnés généré lors de la personnalisation et les données d'abonnés associées sont d'abord stockées dans un registre de localisation nominal lors de la première mise en fonctionnement du module d'identification d'abonné.

**7.** Procédé selon l'une quelconque des revendications précédentes, **caractérisé en ce que**, après la réception et le stockage de l'ensemble de données d'abonnés individuel et définitif dans le module d'identification d'abonné, un accusé de réception du terminal mobile est transmis au réseau cellulaire, consistant notamment en l'exécution d'un démarrage à chaud du terminal mobile en utilisant l'ensemble de données d'abonnés.

**8.** Procédé selon l'une quelconque des revendications précédentes, **caractérisé en ce que**, lors de la première mise en fonctionnement avec l'ensemble de données de paramètres non individuel et préalable, l'abonnement déterminé par l'identification d'abonné préalable est réglé à un état "en cours d'utilisation" lors duquel seule une utilisation restreinte est autorisée, et **en ce que**, après qu'une personnalisation du module d'identification d'abonné a été effectuée avec l'ensemble de données d'abonnés individuel et définitif, l'abonnement déterminé par l'identification d'abonné préalable est réglé à un état "autorisé" qui autorise la réutilisation de l'abonnement déterminé par l'identification d'abonné préalable au moyen d'un autre module d'identification d'abonné.

**9.** Procédé selon l'une quelconque des revendications précédentes, **caractérisé en ce que**, lors d'une tentative de mise en fonctionnement d'un ou de plusieurs autres modules d'identification d'abonnés avec une identification d'abonné préalable identique à un premier module d'identification d'abonné déjà introduit dans le réseau cellulaire à des fins de personnalisation, il est procédé à une mise en file d'attente et à un traitement en fonction de l'ancienneté de la tentative de mise en fonctionnement.

**10.** Procédé selon l'une quelconque des revendications précédentes, **caractérisé en ce que**, lors d'une tentative de mise en fonctionnement d'un ou de plusieurs autres modules d'identification d'abonnés avec une identification d'abonné préalable identique à un premier module d'identification d'abonné déjà introduit dans le réseau cellulaire à des fins de personnalisation, un éventuel blocage du processus de personnalisation est reconnu par le module d'identification d'abonné et conduit à une répétition automatique de la demande de personnalisation.

**11.** Procédé selon l'une quelconque des revendications précédentes, **caractérisé en ce que**, lors d'une tentative de mise en fonctionnement d'un ou de plusieurs autres modules d'identification d'abonnés avec une identification d'abonné préalable identique à un premier module d'identification d'abonné déjà introduit dans le réseau cellulaire à des fins de personnalisation, une éventuelle erreur de routage des données de personnalisation est reconnue par le module d'identification d'abonné, les données sont rejetées et il est procédé à une répétition automatique de la demande de personnalisation.

**12.** Procédé selon la revendication 7 ou selon l'une quelconque des revendications 8 à 11 lorsqu'elles dépendent de la revendication 7, **caractérisé en ce que**, en l'absence d'accusé de réception envoyé par le terminal mobile au réseau cellulaire, il est procédé à un renvoi automatique de l'ensemble de données d'abonnés.

**13.** Procédé selon les revendications 6 et 7 ou selon l'une quelconque des revendications 8 à 12 lorsqu'elles dépendent des revendications 6 et 7, **caractérisé en ce que**, immédiatement après l'accusé de réception envoyé par le terminal mobile au réseau cellulaire, il est procédé au stockage de l'ensemble de données d'abonnés définitif dans le registre de localisation nominal.

**14.** Procédé selon les revendications 6 et 7 ou selon l'une quelconque des revendications 8 à 13 lorsqu'elles dépendent des revendications 6 et 7, **caractérisé en ce que**, immédiatement après l'accusé de réception envoyé par le terminal mobile au réseau cellulaire, il est procédé à l'activation et/ou au déverrouillage de l'abonnement **caractérisé par** l'enregistrement de données d'abonnés définitif dans le registre de localisation nominal.

**15.** Procédé selon la revendication 6 ou selon l'une quelconque des revendications 7 à 14 lorsque dépendent de la revendication 6, **caractérisé en ce que** les ensembles de données d'abonnés définitifs contenus dans le registre de localisation nominal sont déjà stockés en mémoire.

**16.** Procédé selon la revendication 6 ou selon l'une quelconque des revendications 7 à 15 lorsqu'elles dépendent de la revendication 6, **caractérisé en ce que** les abonnements **caractérisés par** les ensembles de données d'abonnés définitifs dans le registre de localisation nominal sont déjà stockés en mémoire.

**17.** Procédé selon la revendication 6 ou selon l'une quelconque des revendications 7 à 16 lorsqu'elles dépendent de la revendication 6, **caractérisé en ce que** les abonnements **caractérisés par** les ensembles de données d'abonnés définitifs dans le registre de localisation nominal sont soumis à des restrictions de services spécifiques.

**18.** Procédé selon l'une quelconque des revendications précédentes, **caractérisé en ce qu'**il est procédé, en relation avec la personnalisation effectuée, à d'autres processus de chargement de propriétés et/ou de services particuliers pour configurer le module d'identification d'abonné.

**19.** Procédé selon l'une quelconque des revendications précédentes, **caractérisé en ce que**, en relation avec la personnalisation effectuée, un dialogue homme-machine ou personnel est automatiquement déclenché par l'intermédiaire du terminal mobile avec le client pour déterminer les données de clients et/ou les services souhaités.

Fig. 1

| | THLR, $N = 1'000$ | | |
|---|---|---|---|
| i = 000 | IMSI*$_i$, MSISDN*$_i$ | | Ki*$_i$, OPc*$_i$, Qc*$_i$ |
| : | : | | : |
| i = 014 | IMSI*$_i$, MSISDN*$_i$ | | Ki*$_i$, OPc*$_i$, Qc*$_i$ |
| : | : | | : |
| i = 038 | IMSI*$_i$, MSISDN*$_i$ | | Ki*$_i$, OPc*$_i$, Qc*$_i$ |
| : | : | | : |
| i = 047 | IMSI*$_i$, MSISDN*$_i$ | | Ki*$_i$, OPc*$_i$, Qc*$_i$ |
| : | : | | : |
| i = 312 | IMSI*$_i$, MSISDN*$_i$ | | Ki*$_i$, OPc*$_i$, Qc*$_i$ |
| i = 313 | IMSI*$_i$, MSISDN*$_i$ | | Ki*$_i$, OPc*$_i$, Qc*$_i$ |
| : | : | | : |
| i = 428 | IMSI*$_i$, MSISDN*$_i$ | | Ki*$_i$, OPc*$_i$, Qc*$_i$ |
| : | : | | : |
| i = 567 | IMSI*$_i$, MSISDN*$_i$ | | Ki*$_i$, OPc*$_i$, Qc*$_i$ |
| : | : | | : |
| i = 999 | IMSI*$_i$, MSISDN*$_i$ | | Ki*$_i$, OPc*$_i$, Qc*$_i$ |

Fig. 2

EP 2 283 666 B1

**EP 2 283 666 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7266371 B1
- WO 03077585 A1
- EP 1895791 A1
- WO 02058361 A1